# EUROPEAN PATENT SPECIFICATION

(11) **EP 2 242 942 B1**
(45) Date of publication and mention of the grant of the patent: **25.04.2012**
(21) Application number: 09711925.9
(22) Date of filing: 12.01.2009
(51) Int. Cl.: F16K 3/06

(54) **REDUCED-ENCUMBRANCE PLATE VALVE**
PLATTENVENTIL MIT REDUZIERTER BELASTUNG
PLAQUE PORTE-SOUPAPE À ENCOMBREMENT RÉDUIT

(30) Priority: 19.02.2008 IT TO20080125
(43) Date of publication of application: 27.10.2010
(73) Proprietor: Ravetti, Roberto, 15030 Rosignano Monferrato (AL) (IT)
(72) Inventor: Ravetti, Roberto, 15030 Rosignano Monferrato (AL) (IT)
(74) Representative: Garavelli, Paolo
(86) International application number: PCT/IT2009/000008
(87) International publication number: WO 2009/104213

(56) References cited:
- FR-A- 1 349 662
- GB-A- 930 483
- US-A1- 2004 164 264
- US-A1- 2006 185 743

## Description

The present invention refers to a reduced-encumbrance plate valve, in particular for closing offtakes of pressurised mains.

Plate valves are known in the art, usually made of steel, typically used for closing mains offtakes for transporting water, gas or other pressurised fluids.

Such known valves are generally composed of a valve body crossed by a duct or a through-opening that can be closed through a sliding or rotary bulkhead inside the valve body and rotating around a rotation axis parallel to the possible direction of fluid flow through the opening. An example of such valves is disclosed in patent n. FR-A-1 349 662.

In known valves, the valve body is generally shaped as a parallelepiped, with external sizes that are extremely bigger than the sizes of the closing bulkhead contained therein. Such sizes, though sometimes necessary to provide the valve with the structural resistance necessary to guarantee a high reliability with respect to the very high pressure values with which it has to operate, make known valves excessively encumbrant, heavy and difficult to handle by responsible operators for their installation. EB-A-930483, FR-A-1349662, US-A-2006/0185743 and US-A-2004/0164264 disclose plate valves according to the preamble of Claim 1.

Therefore, object of the present invention is solving the above prior art problems by providing a reduced-encumbrance plate valve in which the valve body has smaller sizes with respect to known prior art valves, and optimised for guaranteeing housing and movement of the closing bulkhead inside it.

Another object of the present invention is providing a reduced-encumbrance plate valve internally equipped with at least one reinforcing element that allows guaranteeing the same reliability and structural resistance of known prior art valves, though using a valve body with extremely lower and optimised sizes.

The above and other objects and advantages of the invention, as will appear from the following description, are obtained with a reduced-encumbrance plate valve as described in claim 1. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which
- Figure 1 shows a plan view of a preferred embodiment of the reduced-encumbrance plate valve according to the present invention;
- Figure 2 shows a sectional view of the reduced-encumbrance plate valve of the present invention along section line A-A in Figure 1;
- Figure 3 shows an enlargement of the part contained in box A in Figure 2;
- Figure 4 shows a sectional view of the reduced-encumbrance plate valve of the present invention along section line B-B of Figure 1;
- Figure 5 shows a sectional view of the reduced-encumbrance plate valve of the present invention along section line C-C in Figure 1; and
- Figure 6 shows a sectional view of the reduced-encumbrance plate valve of the present invention along section line D-D in Figure 1.

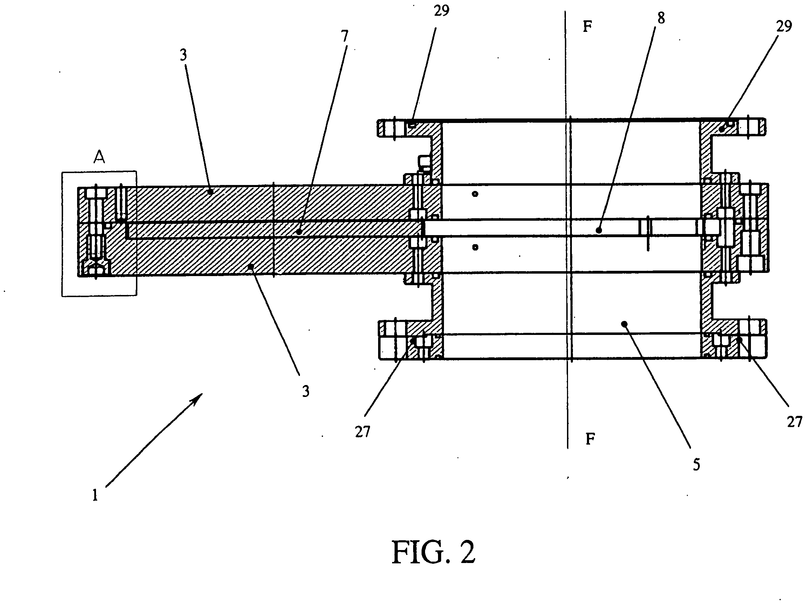

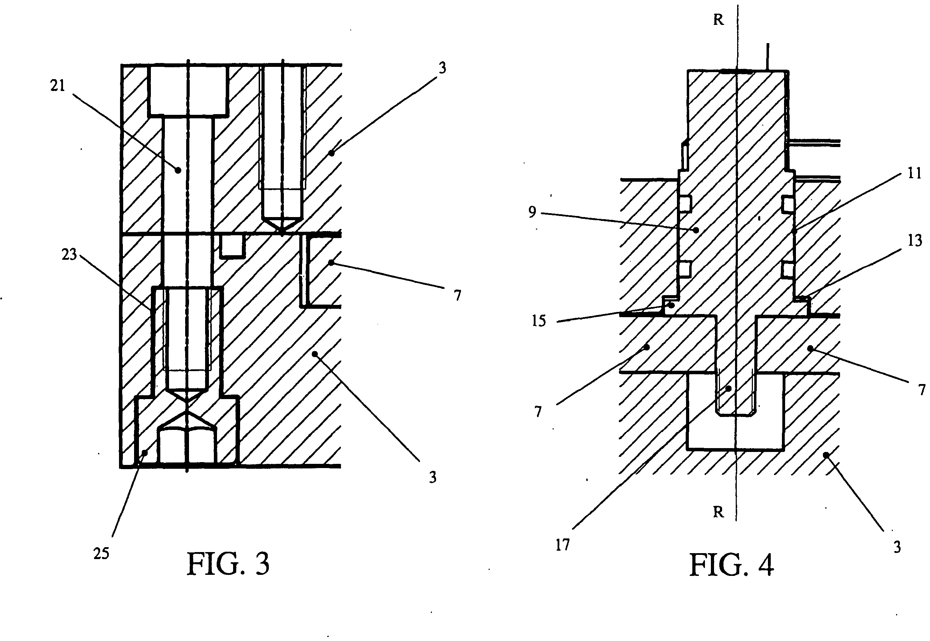

With reference to the Figures, it is possible to note that the reduced-encumbrance valve 1 according to the present invention comprises at least one valve body 3 crossed by at least one through-duct 5 and at least one closing bulkhead 7 movable inside the valve body 3 from a closing position in which it completely closes the through-duct 5 to an opening position of the duct 5 in which it allows a fluid, such as for example water or gas, to cross the duct 5, and vice versa. In particular, the valve body 3 is equipped with external shapes and sizes defined by the envelope of positions assumed by the closing bulkhead 7 passing from the closing position to the opening position. In particular, the valve body 3 can be made of at least two plane plates, parallel, overlapped and spaced, in which the surfaces define walls of an internal recess 8 to the valve body 3 within which the closing bulkhead 7 can move to open or close the through-duct 3. With particular reference to Figures 2 and 3, it is possible to note that the two plates of the valve body 3 are preferably made integral through suitable fastening means, such as, for example, at least one bolt 21 passing through both plates and engaging at least one bush 23 obtained inside a through-screw 25 with hollow head.

The through-duct 5 can be equipped with a first end equipped with connecting means to an end of an offtake of a mains to which the valve 1 according to the present invention can be applied: in particular, such connecting means can comprise at least one manifold or one connecting flange 27. Similarly, the through-duct 5 can be equipped with a second end equipped with connecting means to any appropriate fixture such as for example a mains closing device or a mains drilling device: also in this case, such connecting means can comprise at least one manifold or one connecting flange 29.

In a preferred embodiment of the reduced-encumbrance valve 1 according to the present invention, the closing bulkhead 7, substantially shaped as a petal, is pivoted around at least one rotation pin 9 having a rotation axis (designated by reference axis R-R of Figure 4) substantially parallel to the possible direction of the fluid flow through the duct 5 (designated by reference axis F-F of Figure 2) when the closing bulkhead 7 is in its opening position, since the surface of the closing bulkhead 7 itself is substantially orthogonal to the rotation axis R-R. With particular reference to Figure 4, it is possible to note that the rotation pin 9 is preferably housed inside a related housing seat 11 equipped with at least one groove 13 engaged as abutment by at least one external and circular crown 15 of the rotation pin 9 in such a way as to prevent the pin 9 from being withdrawn from the valve body 3. A first end of the rotation pin 9 is then equipped with a rotation head 17 cooperating with the closing bulkhead 7 to allow this latter one to rotate around the rotation axis R-R and a second end 19 of the rotation pin 9 goes out of the valve body 3 to allow actuating the closing bulkhead 7 manually or by interposing a suitable control panel (not shown) with manual or automatic actuation.

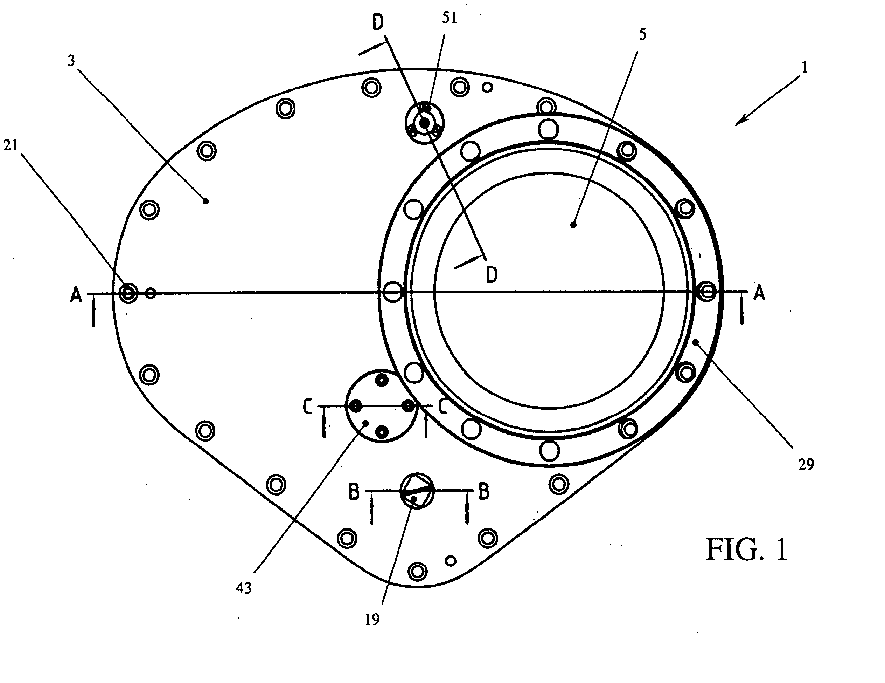

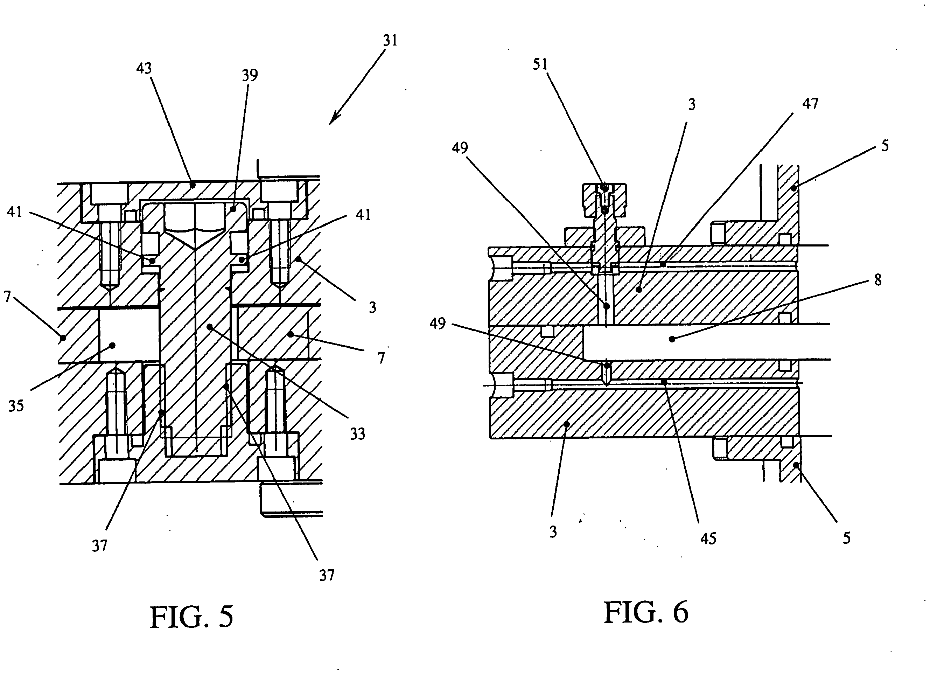

With particular reference to Figures 1 and 5, it is possible to note that the reduced-encumbrance plate valve 1 according to the present invention further comprises at least one reinforcing element 31 adapted to limit the distortions of the valve body 3 once subjected to the pressure exerted by the fluid inside the mains on which it is applied. Preferably, the reinforcing element 31 comprises at least one passing, reinforcing pin 33 housed inside a housing seat obtained through the valve body 3 in a position substantially orthogonal with respect to the surface of the closing bulkhead 7. The reinforcing pin 33 further passes through at least one slit 35 crossing the closing bulkhead 7: obviously, the shape of the slit 35 will be such as not to prevent the opening and closing movement of the closing bulkhead 7. In particular, the reinforcing pin 33 has a first end thereof made integral with one of the plates of the valve body 3, for example through a threading 37, and a second end equipped with at least one head 39 equipped with at least one neck 41, initially not abutting against at least one shoulder of the housing seat of the reinforcing pin 33: in this way, the material composing the valve body 3 is initially free of being distorted without creating high tensions in the reinforcing pin 33; instead, once having reached a predetermined distortion level of the valve body 3, the distortion itself takes the neck 41 to abut against the shoulder of the housing seat, transferring part of the distortion tensions to the reinforcing pin, limiting the following distortions of the valve body 3. Obviously, in case of breakage or maintenance, the reinforcing pin 33 can be accessible through a suitable protecting door 43, the removal of which allows accessing the head 39 for unscrewing the reinforcing pin 33 from the valve body 3.

The reduced-encumbrance plate valve 1 according to the present invention is equipped with at least one internal pressure equalising system: with particular reference to Figures 1 and 6, it is possible to note that such system comprises at least one first orifice 45 communicating with the duct 5 upstream of the closing bulkhead 7 and a second orifice 47 communicating with the duct 5 downstream of the closing bulkhead 7. Moreover, the first and the second orifice, respectively 45 and 47, can be communicated through a third orifice 49 crossing the internal recess 8 of the valve body 3 housing the closing bulkhead 7. The third orifice 49 is then equipped with at least one equalising valve 51 communicating with the external environment.

## Claims

1. Reduced-encumbrance plate valve (1) comprising at least one valve body (3) crossed by at least one through-duct (5) and at least one closing bulkhead (7) movable inside said valve body (3) from a closing position of said through-duct (5) to an opening position of said duct (5) and vice versa, said valve body (3) being defined by an envelope of positions assumed by said closing bulkhead (7) passing from said closing position to said opening position, **characterised in that** it comprises at least one internal pressure equalising system comprising at least one first orifice (45) communicating with said duct (5) upstream of said closing bulkhead (7) and a second orifice (47) communicating with said duct (5) downstream of said closing bulkhead (7), said first orifice (45) and said second orifice (47) being communicating through a third orifice (49) crossing said internal recess (8) of said valve body (3) housing said closing bulkhead (7), said third orifice (49) being equipped with at least one equalising valve (51) communicating with the external environment.

2. Reduced-encumbrance plate valve (1) according to claim 1, **characterised in that** said plate valve (1) further comprises at least one reinforcing element (31) comprising at least one passing, reinforcing pin (33) housed inside a housing seat through said valve body (3), said reinforcing pin (33) passing through at least one slit (35) crossing said closing bulkhead (7).

3. Reduced-encumbrance plate valve (1) according to claim 1, **characterised in that** said valve body (3) is composed of at least two plane plates, parallel, overlapped and spaced, whose surfaces define walls of an internal recess (8) to said valve body (3) inside which said closing bulkhead (7) moves.

4. Reduced-encumbrance plate valve (1) according to claim 3, **characterised in that** said plane plates are made integral through at least one bolt (21) passing through both said plates and engaging with at least one bush (23) obtained inside a through-screw (25) with hollow head.

5. Reduced-encumbrance plate valve (1) according to claim 1, **characterised in that** said through-duct (5) is equipped with a first end equipped with connecting means to an end of an offtake of a mains and a second end equipped with connecting means to a fixture.

6. Reduced-encumbrance plate valve (1) according to claim 5, **characterised in that** said connecting means comprise at least one manifold or one connecting flange (27, 29).

7. Reduced-encumbrance plate valve (1) according to claim 1, **characterised in that** said closing bulkhead (7) is pivoted around at least one rotation pin (9) having a rotation axis (R-R) substantially parallel to a direction (F-F) of a fluid flow through said duct (5), a surface of said closing bulkhead (7) being substantially orthogonal to said rotation axis (R-R).

8. Reduced-encumbrance plate valve (1) according to claim 7, **characterised in that** said rotation pin (9) is housed inside a housing seat (11) equipped with at least one groove (13) engaged in abutment by at least one circular and external crown (15) of said rotation pin (9), a first end of said rotation pin (9) being equipped with a rotation head (17) cooperating with said closing bulkhead (7) and a second end (19) of said rotation pin (9) going out of said valve body (3).

9. Reduced-encumbrance plate valve (1) according to claim 2, **characterised in that** said reinforcing pin (33) has a first end thereof made integral with said valve body (3) and a second end equipped with at least one head (39) equipped with at least one neck (41) not abutting against at least one shoulder of said housing seat of said reinforcing pin (33).

## Patentansprüche

1. Flachventil mit reduziertem Raumbedarf (1) mit mindestens einem Ventilkörper (3), der von einer durchgehende Leitung (5) durchquert wird, mit mindestens einer abschließenden Scheidewand (7), die im genannten Ventilkörper (3) aus einer Schließposition der genannten durchgehenden Leitung (5) in eine Öffnungsposition der genannten Leitung (5) und umgekehrt bewegt werden kann, der genannte Ventilkörper (3) wird durch lineare Positionen definiert, die von der genannten abschließenden Scheidewand (7) eingenommen werden, welche aus der genannten Schließposition in die genannte Öffnungsposition wechselt, und ist **dadurch gekennzeichnet, dass** sie mindestens ein internes Druckausgleichsystem mit mindestens einer ersten Öffnung (45), die mit der genannten Leitung (5) oberhalb der genannten Scheidewand (7) in Kommunikation steht, und eine zweite Öffnung (47), die mit der genannten Leitung (5) unterhalb der genannten abschließenden Scheidewand (7) in Kommunikation steht, einschließt, die genannte erste Öffnung (45) und die genannte zweite Öffnung (47) stehen durch eine dritte Öffnung (49) in Kommunikation, die den genannten internen Hohlraum (8) des genannten Ventilkörpers (3) durchquert, der die genannte abschließende Scheidewand (7) aufnimmt, die genannte dritte Öffnung (49) ist mit mindestens einem Ausgleichventil (51) ausgestattet, das mit der äußeren Umgebung in Kommunikation steht.

2. Flachventil mit reduziertem Raumbedarf (1) gemäß Patentanspruch 1, das **dadurch gekennzeichnet ist, dass** das genannte Flachventil (1) außerdem mindestens ein Verstärkungselement (31) mit mindestens einem durchgehenden Verstärkungsbolzen (33) enthält, der durch den Ventilkörper (3) in einer Aufnahme sitzt, der genannte Verstärkungsbolzen (33) durchquert mindestens ein Langloch (35), das die genannte abschließende Scheidewand (7) durchquert.

3. Flachventil mit reduziertem Raumbedarf (1) gemäß Patentanspruch 1, das **dadurch gekennzeichnet ist, dass** der genannte Ventilkörper (3) aus mindestens zwei Flachplatten besteht, die parallel überlagert und distanziert sind, deren Oberflächen die Wände eines internen Hohlraums (8) des genannten Ventilkörpers 3 definieren, in dem sich die genannte abschließende Scheidewand (7) bewegt.

4. Flachventil mit reduziertem Raumbedarf (1) gemäß Patentanspruch 3, das **dadurch gekennzeichnet ist, dass** die genannten Flachplatten durch einen beide genannten Platten durchgehenden Bolzen (21) aus einem Stück sind, der in mindestens einer Buchse (23) sitzt, die in einer durchgehenden Inbusschraube (25) erhalten wird.

5. Flachventil mit reduziertem Raumbedarf (1) gemäß Patentanspruch 1, das **dadurch gekennzeichnet ist, dass** die genannte durchgehende Leitung (5) mit einem ersten Endstück ausgestattet ist, das mit Verbindungsvorrichtungen an einem Endstück mit einer Abzweigung einer Leitung versehen ist, und mit einem zweiten Endstück ausgestattet ist, das mit Verbindungsvorrichtungen an einer Ausrüstung versehen ist.

6. Flachventil mit reduziertem Raumbedarf (1) gemäß Patentanspruch 5, das **dadurch gekennzeichnet ist, dass** die genannten Verbindungsvorrichtungen mindestens einen Sammler oder einen Verbindungsflansch (27, 29) einschließen.

7. Flachventil mit reduziertem Raumbedarf (1) gemäß Patentanspruch 1, das **dadurch gekennzeichnet ist, dass** die genannte abschließende Scheidewand (7) an mindestens einem Drehbolzen (9) angelenkt ist, der eine Drehachse (R-R) hat, welche grundlegend parallel zu einer Flussrichtung (F-F) der Flüssigkeit durch die genannte Leitung (5) ist, eine Oberfläche der genannten abschließenden Scheidewand (7) ist grundlegend orthogonal zur genannten Drehachse (R-R).

8. Flachventil mit reduziertem Raumbedarf (1) gemäß Patentanspruch 7, das **dadurch gekennzeichnet ist, dass** der genannte Drehbolzen (9) in einer Aufnahme (11) sitzt, die mit mindestens einer Kehle (13) ausgestattet ist, die am Anschlag durch mindestens einen Kranz (15) und extern vom genannten Drehbolzen (9) gespannt wird, ein erstes Endstück des genannten Drehbolzens (9) ist mit einem Drehkopf (17) ausgestattet, der mit der genannten abschließenden Scheidewand (7) zusammenarbeitet, und ein zweites Endstück (19) des genannten Drehbolzens (9) tritt aus dem genannten Ventilkörper (3) heraus.

9. Flachventil mit reduziertem Raumbedarf (1) gemäß Patentanspruch 2, das **dadurch gekennzeichnet ist, dass** der genannte Verstärkungsbolzen (33) ein erstes Endstück hat, das ein Stück mit dem Ventilkörper (3) bildet, und ein zweites Endstück, das mit mindestens einem Kopf (39) ausgestattet ist, der mit mindestens einem Bund (41) ausgestattet ist, welcher an mindestens einem Ansatz der genannten Aufnahme des genannten Verstärkungsbolzens (33) abgestützt ist.

## Revendications

1. Valve plate à encombrement réduit (1) comprenant au moins un corps valve (3) traversé par au moins un conduit passant (5) et au moins une paroi de fermeture (7) mobile à l'intérieur dudit corps valve (3) d'une position de fermeture dudit conduit passant (5) à une position d'ouverture dudit conduit (5) et vice versa, ledit corps valve (3) étant définit par une ensemble de positions assumées par ladite paroi de fermeture (7) passant de ladite position de fermeture à ladite position d'ouverture, **caractérisée par** le fait de comprendre au moins un système compensateur interne de pression comprenant au moins un premier orifice (45) communiquant avec ledit conduit (5) en amont de ladite paroi de fermeture (7) et un second orifice (47) communiquant avec ledit conduit (5) en aval de ladite paroi de fermeture (7), ledit premier orifice (45) et ledit second orifice (47) étant communiquant à travers un troisième orifice (49) traversant ladite cavité interne (8) dudit corps valve (3) accueillant ladite paroi de fermeture (7), ledit troisième orifice (49) étant doté d'au moins une valve de compensation (51) communiquant avec l'environnement externe.

2. Valve plate à encombrement réduit (1) selon la revendication 1, **caractérisée par le fait que** ladite valve plate (1) comprend en outre au moins un élément de renfort (31) comprenant au moins un pivot de renfort (33) passant accueilli à l'intérieur d'un logement à travers ledit corps valve (3), ledit pivot de renfort (33) étant passant à travers au moins une boutonnière (35) traversant ladite paroi de fermeture (7).

3. Valve plate à encombrement réduit (1) selon la revendication 1, **caractérisée par le fait que** ledit corps valve (3) est composé d'au moins deux plaques plates, parallèles superposées et espacées, dont les surfaces définissent des parois d'une cavité interne (8) audit corps valve 3 dans laquelle se déplace ladite paroi de fermeture (7).

4. Valve plate à encombrement réduit (1) selon la revendication 3, **caractérisée par le fait que** lesdites plaques plates sont solidarisées au moyen d'au moins un boulon (21) passant à travers lesdites plaques et faisant prise dans au moins un fourreau (23) obtenu à l'intérieur d'une vis passante (25) à tête creuse.

5. Valve plate à encombrement réduit (1) selon la revendication 1, **caractérisée par le fait que** ledit conduit passant (5) est doté d'une première extrémité munie de moyens de connexion à une extrémité d'une dérivation d'une conduite et une seconde extrémité dotée de moyens de connexion à un outillage.

6. Valve plate à encombrement réduit (1) selon la revendication 5, **caractérisée par le fait que** lesdits moyens de connexion comprennent au moins un collecteur ou une bride de connexion (27, 29).

7. Valve plate à encombrement réduit (1) selon la revendication 1, **caractérisée par le fait que** ladite paroi de fermeture (7) est montée autour d'au moins un pivot de rotation (9) ayant un axe de rotation (R-R) substantiellement parallèle à une direction (F-F) d'un flux de fluide à travers ledit conduit (5), une surface de ladite paroi de fermeture (7) étant substantiellement orthogonale audit axe de rotation (R-R).

8. Valve plate à encombrement réduit (1) selon la revendication 7, **caractérisée par le fait que** ledit pivot de rotation (9) est accueilli à l'intérieur d'un logement (11) doté d'au moins une gorge (13) engagée en butée par au moins une couronne (15) circulaire et externe dudit pivot de rotation (9), une première extrémité dudit pivot de rotation (9) étant doté d'une tête de rotation (17) coopérant avec ladite paroi de fermeture (7) et une seconde extrémité (19) dudit pivot de rotation (9) sortant dudit corps valve (3).

9. Valve plate à encombrement réduit (1) selon la revendication 2, **caractérisée par le fait que** ledit pivot de renfort (33) a une première extrémité solidarisée audit corps valve (3) et une seconde extrémité dotée d'au moins une tête (39) dotée d'au moins un col (41) ne s'appuyant pas contre au moins un épaulement dudit logement dudit pivot de renfort (33).
